# EUROPÄISCHE PATENTSCHRIFT

(11) **EP 2 625 553 B1**
(45) Veröffentlichungstag und Bekanntmachung des Hinweises auf die Patenterteilung: **24.08.2016**
(21) Anmeldenummer: 11794618.6
(22) Anmeldetag: 28.09.2011
(51) Int. Cl.: G01V 8/16, G02B 26/10

(54) **LICHTVORHANG**
LIGHT CURTAIN
RIDEAU LUMINEUX

(30) Priorität: 06.10.2010 AT 16672010
(43) Veröffentlichungstag der Anmeldung: 14.08.2013
(73) Patentinhaber: isiQiri interface technologies GmbH, 4232 Hagenberg (AT)
(72) Erfinder: KÖPPE, Robert, 4020 Linz (AT)
(74) Vertreter: Burgstaller, Peter
(86) Internationale Anmeldenummer: PCT/AT2011/000398
(87) Internationale Veröffentlichungsnummer: WO 2012/045101

(56) Entgegenhaltungen:
- EP-A1- 1 267 143
- US-A- 5 070 237
- US-A1- 2004 227 110

## Beschreibung

Die Erfindung betrifft einen Lichtvorhang.

Ein Lichtvorhang im Sinne dieser Beschreibung ist eine optische Überwachungseinrichtung in welcher das Prinzip des Lichtschrankens von einem linienförmigen Überwachungsbereich zu einen flächigen Überwachungsbereich erweitert ist.

Lichtvorhänge werden im einfachsten Fall durch Aneinanderreihung von parallel zueinander ausgerichteten Lichtschranken gebildet. Für die zuverlässige Detektion eines Objekts und auch für eine gute Detektion seiner Position in der überwachten Fläche ist eine große Anzahl von Lichtsensoren und von Lichtquellen erforderlich. Fallweise werden Lichtquellen verwendet, bei denen die Querschnittsfläche des ausgesandten Lichtstrahls annähernd die Form einer geraden Linie hat. Indem diese Linie parallel zur Ausrichtung der durch Aneinanderreihung von Lichtsensoren gebildeten Reihe ausgerichtet wird, kann mit einer geringeren Anzahl an Lichtquellen das Auslangen gefunden werden als an Lichtsensoren.

In der EP 0 361 374 A2 wird vorgeschlagen einen Lichtdetektor zu bilden, indem Fluoreszenzstrahlung, welche in einem mit einem organischen Fluoreszenzfarbstoff dotierten, lichtdurchlässigen Kunststoff bei äußerem Lichteinfall entsteht, mittels Lichtwellenleitern, welche ebenfalls mit einem Fluoreszenzfarbstoff dotiert sind, an ein lichtempfindliches Halbleiterelement weiter geleitet wird. Damit lassen sich kostengünstiger großflächige Detektorelemente bilden, als dies mit lichtempfindlichen Halbleiterelementen auf Basis üblicher Halbleitermaterialien wie typischerweise Silizium möglich wäre.

Gemäß der DE 34 41 498 C2 werden mit Fluoreszenzstoff dotierte Streifen eines lichtdurchlässigen Materials wie Glas oder klarer Kunststoff einseitig mit einer Photodiode verbunden und nebeneinander angeordnet, sodass sie eine größere Detektorfläche bilden, innerhalb derer für Teilflächen einzeln gemessen werden kann, ob sie von Licht getroffen werden oder nicht.

In der AT 507267 A1 und in der AT 507702 A2 sind optische Detektorflächen und Anwendungen dazu als Steuerflächen für Datenverarbeitungsanlagen beschrieben. Dabei sind die optischen Detektorflächen aus einem oder mehreren flächigen Lichtwellenleitern aufgebaut, an welchen jeweils mindestens ein demgegenüber sehr kleinflächiger photoelektrischer Sensor angebracht ist, wobei eine Schicht des Lichtwellenleiters photolumineszente Eigenschaften aufweist. Die Strahlung eines auf der Detektorfläche auftreffender Lichtpunktes wird durch Photolumineszenz in langwelligeres Licht umgewandelt, welches sich im flächigen Lichtwellenleiter ausbreitet, dabei mit steigender Entfernung zum Lichtpunkt abgeschwächt wird und an den photoelektrischen Sensoren aus dem Lichtwellenleiter ausgekoppelt und detektiert wird. Detektorflächen dieser Art können flexibel und handlich sein, sind pro Fläche kostengünstig und für eine schnelle Signalverarbeitung von Lichtsignalen gut geeignet. Indem die Abschwächung des sich im Wellenleiter fortpflanzenden Lichtsignals berücksichtigt wird ist unter Anwendung mathematischer Auswertungsmethoden auch bei großen Detektorflächen mit wenigen Abgreifpunkten eine gute Ortsauflösung bei der Feststellung des Auftrefffortes eines Lichtpunktes möglich. Die Anwendung für einen Lichtvorhang ist nicht angedacht.

Die DE 10 2005 040 351 B4 beschreibt einen Detektor, bei welchem auf einem flächigen, lichtleitenden Substrat wie typischerweise einer Glasscheibe eine im sichtbaren Spektralbereich kaum bis gar nicht absorbierende, fluoreszierende Materialschicht aufgebracht ist, welche eingestrahltes UV-Licht in Licht umwandelt, welches im Substrat auch zu dessen Randbereichen geleitet wird. An den Randbereichen des Substrates sind mit diesem optisch gekoppelt Strahlungssensoren angebracht, welche die aus dem Substrat ankommende Lichtleistung in ein elektrisches Signal übersetzen. Abschattung des ansonsten eingestrahlten Lichtes bewirkt eine Veränderung des elektrischen Signals. Der Detektor kann als sehr unauffällige Zutrittsüberwachungsanlage für den zwischen Lichtquelle und Detektorfläche - welche eine ohnedies vorhandene Glasscheibe sein kann - liegenden Raum verwendet werden. Es kann allerdings keine genauere Position erfasst werden.

Unter anderem in der DE 2550653 B2 ist ein Lichtvorhang für die Überwachung eines Raumes beschrieben wobei eine einzelne, sogenannte Drehlichtquelle angewandt wird. Von einer einzelnen Lichtquelle aus wird dabei ein Lichtstrahl ausgesandt, wobei allerdings die Lichtquelle - bzw. ein Spiegel auf welchen die Lichtquelle leuchtet - gedreht wird, sodass der Lichtstrahl in einem bestimmten Takt eine Fläche des Raumes durchstreicht. An dem Streifen der Wände, an welchen der Lichtstrahl trifft, wenn sich kein abschattendes Objekt im Raum befindet, sind die Wände mit Reflektoren, nämlich mit Umkehrreflektoren oder Planspiegeln versehen, sodass der Lichtstrahl entweder direkt oder indirekt etwa zur Lichtquelle zurückreflektiert wird. Im Nahbereich der Lichtquelle befindet sich auch ein Lichtsensor. Wenn kein Licht zurückreflektiert wird, ist dies ein Hinweis darauf, dass sich ein abschattendes Objekt zwischen Lichtquelle und jeweils ansonsten angestrahltem Reflektorbereich befindet. Man kann für die Überwachung eines Raumes mit einer einzigen Lichtquelle und mit einem einzigen Lichtsensor das Auslangen finden. Nachteilig ist, dass die Überwachung durch spiegelnde Objekte "ausgetrickst" werden kann, dass eine gute Ortsauflösung oftmals kaum möglich ist und dass die erforderlichen reflektierenden Streifen an den Wänden des Raumes oftmals stören.

In der US 2004/227110 A1 wird ein Aufbau zum Detektieren von Objekten und deren Längenbestimmung in einer Ebene beschrieben. Dabei kommt eine kollimierte Lichtquelle zum Einsatz, die durch einen drehbaren Spiegel in kontrollierter Weise abgelenkt wird. Das Licht trifft auf einen Lichtwellenleiter, der im Inneren eine fluoreszierende Schicht aufweist und das Licht an seine Enden weiter leitet, wo sich Detektoren befinden. Durch Erfassen der Spiegelstellung und Auswertung des Signals an den Detektoren können die Position und die Länge (bei bekanntem Abstand) eines Objekts bestimmt werden. Die Längenbestimmung erfolgt bestimmungsgemäß an Druckmaterial in einem Drucker.

In der EP 1267143 A1 wird ein Aufbau zum Detektieren von Objekten und deren Längenbestimmung in einer Ebene beschrieben. Es kommt eine kollimierte Lichtquelle zum Einsatz, die durch einen drehbaren Spiegel in kontrollierter Weise abgelenkt wird. Zur Detektion werden Photodetektoren an den Enden eines Lichtwellenleiters mit fluoreszierender Schicht verwendet. Es wird beschrieben, wie, durch Anordnung zweier solcher Systeme in einem rechten Winkel zueinander, die Position und die Abmessungen eines Objekts in einer zweiten Richtung der Ebene erfasst werden können.

In der US 5070237 A wird ein Detektionsverfahren von Objekten beschrieben. Dabei kommt eine kollimierte Lichtquelle zum Einsatz, die durch einen drehbaren Spiegel in kontrollierter Weise abgelenkt wird. Das Licht trifft direkt auf den Lichtwellenleiter oder überstreicht eine zu überwachende Linie, von der es reflektiert wird und zum Lichtwellenleiter gelangt. Der Lichtwellenleiter weist im Inneren eine fluoreszierende Schicht auf, die das Licht an seine Enden weiter leitet, wo sich Detektoren befinden. Durch Erfassen der Spiegelstellung und Auswertung des Signals an den Detektoren können die Position und die Länge eines Objekts, welches sich auf der zu überwachenden Linie befindet, bestimmt werden. Als Anwendungsbeispiele werden die Vermessung oder Kontrolle von Produktion (Gepäck, Leiterplatten..) aufgeführt.

Die Vorrichtungen der US 2004/227110 A1, EP 1267143 A1 und US 5070237 A haben die Verwendung einer kollimierten Lichtquelle, eines drehbaren Spiegels, eines fluoreszierenden Lichtwellenleiters und Photodetektoren an einem oder beiden Enden des Lichtwellenleiters gemein. Nachteilig ist vor allem, dass die Länge der zu überwachenden Fläche limitiert ist, durch den Umstand, dass die Intensität des durch Fluoreszenz erzeugten Lichts im Inneren des Lichtwellenleiters mit steigender Distanz zum Auftreffort des Lichtstrahls der Lichtquelle abnimmt. Wird der Lichtwellenleiter zu lange, so erreicht das durch Fluoreszenz erzeugte Licht in seinem Inneren keines seiner beiden Enden und ist somit nicht durch die dort angebrachten Photodetektoren detektierbar.

Die der Erfindung zu Grunde liegende Aufgabe besteht darin, einen Lichtvorhang bereit zu stellen, durch welchen in zwei Dimensionen innerhalb einer zu überwachenden Fläche die Tatsache der Anwesenheit eines Objektes, sowie Größe und Position des Objektes in Echtzeit feststellbar sind. Gegenüber bekannten Lichtvorhängen für diesen Zweck soll der neu zu schaffende Lichtvorhang bei höherer Geschwindigkeit und besserer Ortsauflösung robuster funktionieren und dennoch mittels einer geringeren Anzahl von insgesamt kostengünstigen Einzelteilen realisierbar sein.

Zum Lösen der Aufgabe wird von einer an die DE 2550653 B2 angelehnten Funktionsweise ausgegangen. Die zu überwachende Fläche wird von einer Lichtquelle aus durch einen kollimierten ("parallel gebündelten") Lichtstrahl wiederholt überstrichen, wobei die Leistung des die Fläche durchquerenden Lichtes gemessen wird und wobei der zeitliche Verlauf der Richtung des Lichtstrahls bekannt ist. Eine Abschattung des Lichtstrahls durch ein in der zu überwachenden Fläche befindliches Objekt bewirkt eine Verringerung der gemessenen Lichtleistung. Indem zum Zeitpunkt einer Minderung bzw. Steigerung der gemessenen Lichtleistung auch der Drehwinkel des verursachenden Lichtstrahls bekannt ist, sind damit in Umfangsrichtung der Drehbewegung des Lichtstrahls die Winkelkoordinaten der Schattenränder eines in der zu überwachenden Fläche befindlichen, abschattenden Objektes messbar.

Erfindungsgemäß ist vorgesehen, für die Messung der Leistung des Lichtstrahls am Rand der zu überwachenden Fläche eine optische Detektorfläche anzubringen, welche in Abhängigkeit von der Leistung des auftreffenden Laserlichtes ein elektrisches Signal generiert, wobei die Detektorfläche ein flächiger Lichtwellenleiter ist, in welchem photolumineszente Partikel integriert sind und an welchem ein oder mehrere photoelektrische Sensoren angebracht sind, welche im Stande sind, Licht aus der Wellenleitermode auszukoppeln und dadurch ein elektrisches Signal zu generieren, dessen Stärke von der Leistung des ausgekoppelten Lichtes abhängig ist.

Die beschriebene Detektorfläche ist kostengünstig großflächig, bzw. als langer Streifen herstellbar und es kann sehr schnell gemessen werden, womit eine hohe Ortsauflösung erreichbar ist. Es ist nicht erforderlich, die Signale vieler photoelektrischer Sensoren zu messen, sondern es reicht, das Summensignal aller photoelektrischen Sensoren je Detektor gemeinsam zu messen, da der Ort einer Schattengrenze ohnedies durch die Kenntnis der Richtung des zugehörigen Lichtstrahls zum Zeitpunkt einer Schwankung des Summensignals bekannt ist.

Die Erfindung wird an Hand dreier Zeichnungen veranschaulicht:
- Fig. 1:: zeigt eine Prinzipskizze einer erfindungsgemäß überwachten Fläche von oben.
- Fig. 2:: zeigt beispielhaft die wesentlichen Elemente einer beispielhaften Lichtquelle wie sie für einen erfindungsgemäßen Lichtvorhang angewandt werden kann.
- Fig. 3:: zeigt eine Querschnittsansicht einer als länglicher Streifen ausgebildete Detektorfläche, welche für einen erfindungsgemäßen Lichtvorhang angewandt werden kann.
- Fig. 4:: zeigt den zeitlichen Verlauf des Ergebnisses der Messung der von einer Lichtquelle stammenden Lichtleistung.

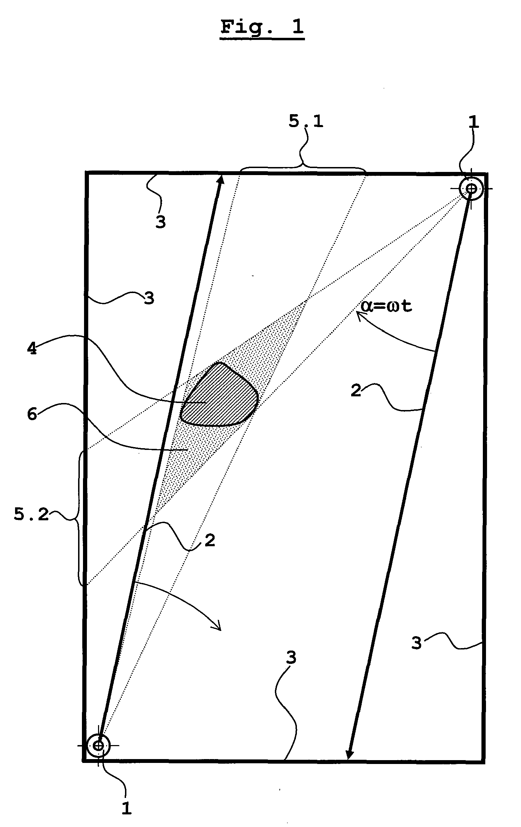

Gemäß Fig. 1 ist an zwei zueinander diagonal gegenüberliegenden Ecken einer rechteckigen zu überwachenden Fläche jeweils eine Lichtquelle 1 angeordnet, welche jeweils einen kollimierten Lichtstrahl 2 aussendet, wobei die Richtung des Lichtstrahls 2 - wie durch die gekrümmten Pfeile angedeutet - kontinuierlich gedreht wird.

Die Begrenzungen der zu überwachenden Fläche sind in dem in Fig. 1 skizzierten Beispiel durch vier Wände gebildet. An jeder der Wände ist in der Höhe der zu überwachenden Fläche jeweils ein Streifen 3 einer Detektorfläche angebracht, durch welche die Leistung (Intensität integriert über die Querschnittsfläche) des auf sie treffenden Lichtstrahls 2 messbar ist.

In der zu überwachenden Fläche ist ein Objekt 4 angeordnet, welches von zwei Detektorflächen 3 jeweils einen Teilbereich 5.1 bzw. 5.2 gegen jeweils eine Lichtquelle 1 abschattet.

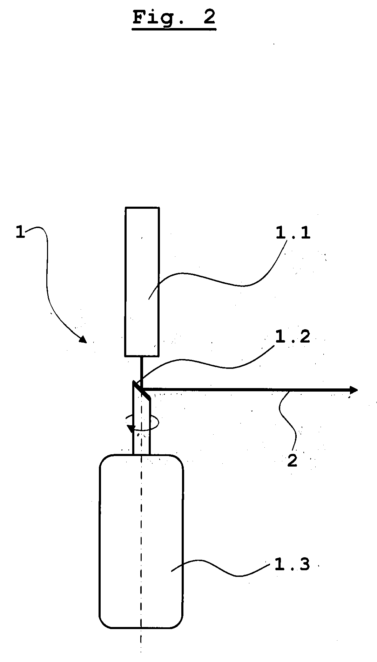

Gemäß Fig. 2 strahlt eine Laserlichtquelle 1.1 einen Laserstrahl 2 senkrecht nach unten auf einen Spiegel 1.2, welcher stirnseitig am oberen Ende eines senkrecht ausgerichteten Wellenstumpfes eines Elektromotors 1.3 angeordnet ist und dessen Ebene um 45° gegenüber der Waagrechten geneigt steht. Durch Rotation der Welle des Elektromotors 1.3 um ihre vertikale Achse rotiert damit auch der Spiegel 1.2 um diese vertikale Achse und die Richtung des Lichtstrahls 2 rotiert gleichermaßen in einer horizontalen Ebene.

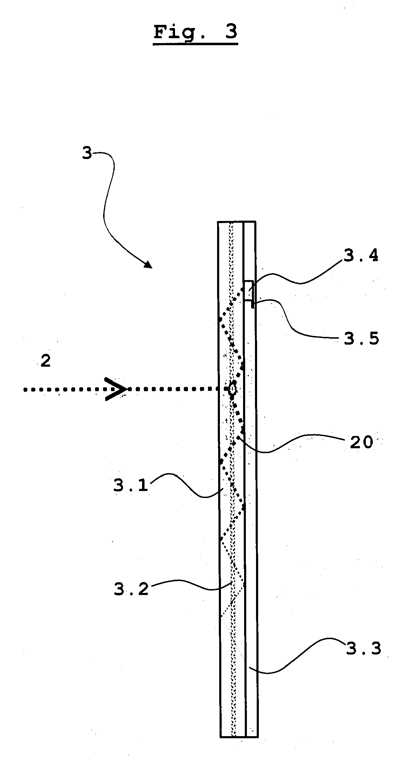

Die in ihrem Aufbau in Fig. 3 (nicht maßstäblich!) beispielhaft skizzierte, als länglicher Streifen ausgebildete beispielhafte Detektorfläche 3 weist zwei ca. 0.1 mm dicken Deckschichten 3.1 aus PET auf, zwischen welchen eine ca. 0.001 mm dicke Schicht 3.2 aus einer homogenen Mischung des Kunststoffs Polyvinylalkohol und des Farbstoffs Rhodamin 6G laminiert ist. Die Schicht 3.2 ist photolumineszent. Sie ist so stark, dass ihre Absorption für normal darauf auftreffendes Licht mit 532 nm Wellenlänge über 80% beträgt. (Die dafür erforderliche Schichtstärke ist am besten durch Versuch zu ermitteln). Wenn durch den Lichtstrahl 2 ein Lichtfleck mit passendem Spektrum auf die Schicht 3.2 trifft, so löst er Photolumineszenz an den Farbstoffpartikeln der Schicht 3.2 aus. Dabei entsteht diffus gestreutes, langwelligeres Licht. Entsprechend dem bekannten zu Grunde liegenden Funktionsprinzip der Lichtwellenleitung breitet es sich in den transparenten Schichten 3.1 aus und bleibt im wesentlichen auch in diesen Schichten, da es an den Grenzflächen zur Umgebung (Luft) bzw. Stützschicht 3.3 auf Grund des unterschiedlichen Brechungsindex in das Material der Schichten 3.1 zurückreflektiert wird.

Beispielsweise in einem Abstand von 5 cm zueinander sind entlang der Längsrichtung der Detektorfläche typischerweise als Silizium-Photodioden ausgebildete Photodetektoren 3.4, welche eine Querschnittsfläche von etwa 2x2 mm² einnehmen können an der von der Schicht 3.2 abgewandten Seite der von der Einstrahlung abgewandt liegenden PET-Schicht 3.1 so angebracht, dass sie Licht aus der PET-Schicht auskoppeln und an ihren pn-Übergang einkoppeln. Dadurch wird am pn-Übergang in Form einer Spannung oder eines Stromes ein elektrisches Signal generiert. Dieses elektrische Signal wird über eine zweipolige Leitung 3.5 zu einer Anschlussstelle an die Detektorfläche 3 geleitet und einer weiteren Verarbeitung zugeführt. Für den vorliegenden Anwendungsfall reicht es aus, das Summensignal aller Photodetektoren 3.4 einer Detektorfläche 3 zu beachten und nicht die einzelnen Signale jedes Photodetektors 3.4. Man kann also beispielsweise alle durch Photodioden gebildeten Photodetektoren 3.4 einer Detektorfläche parallel schalten und den gemeinsamen Kurzschlussstrom messen. Dieser Kurzschlussstrom ist weitgehend proportional zu der an den einzelnen pn-Übergängen aus der Wellenleitermode ausgekoppelten Lichtleistung.

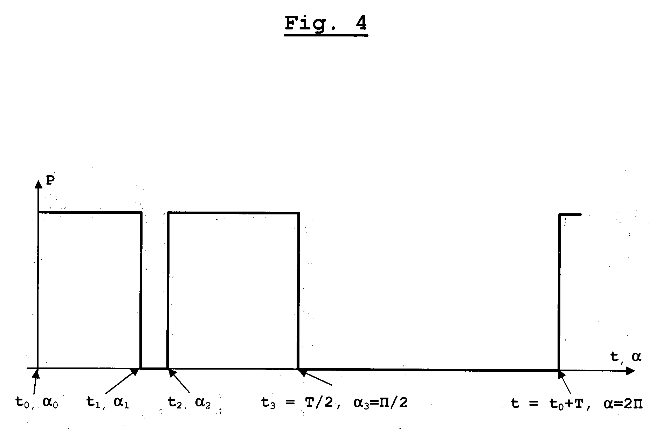

Fig. 4 zeigt beispielhaft das Summensignal der Lichtdetektion an zwei aneinander angrenzenden Begrenzungslinien der zu überwachenden Fläche, wobei die beiden Begrenzungslinien von der gleichen Lichtquelle 1 (siehe Fig. 1) aus angestrahlt werden. Zum Zeitpunkt t₀ strahlt der Lichtstrahl 2 an den Anfang des Detektorstreifens an der ersten Wand; es wird eine Leistung P gemessen. Zum Zeitpunkt t₁ erreicht der Lichtstrahl die Abschattung 4 (Fig. 1); die gemessene Leistung sinkt (annähernd) auf Null. Zum Zeitpunkt t₂ tritt der Lichtstrahl wieder aus der Abschattung; die gemessene Leistung steigt wieder auf den Normalwert. Zum Zeitpunkt t₃ erreicht der Lichtstrahl das Ende des Detektorstreifens an der zweiten Wand und damit das Ende des Messbereichs für den Lichtstrahl aus der einen Lichtquelle 1; die gemessene Leistung sinkt wieder auf Null und bleibt auf diesem Wert, bis ab dem Zeitpunkt t=t₀+T der Durchlauf von Neuem beginnt. Die Zeitspanne T ist dabei die Periodendauer, innerhalb der sich die Richtung eines Lichtstrahls um eine Umdrehung weiterdreht.

Über die Gleichung α = ω.t wobei ω die Winkelgeschwindigkeit der Richtungsänderung des Lichtstrahls 2 ist, ist dabei jedem Zeitpunkt t genau ein Winkel α des Lichtstrahls in der zu überwachenden Fläche zugeordnet. Aus den genauen Zeitpunkten des Aus- und wieder Angehen des Signals kann eine auswertende Steuerung damit auf die genauen Positionen der Schattenränder auf dem Detektor schließen. Damit wird gleichermaßen auf die Position und auch auf die ungefähren Umrisse des abschattenden Objektes geschlossen.

Es ist sehr sinnvoll, in einer übergeordneten Steuerung jeweils den Zeitpunkten t₀, t₀+T, t₀+2T.... den Winkel α = 0 zuzuordnen und somit die Winkelmessung mit jedem Durchlauf des Lichtstrahls neu zu kalibrieren. Durch die Winkel t1 und t2, welche die Grenzen einer Abschattung 5.1, 5.2 durch ein Objekt 4 markieren, ist somit ein Sektor definiert, innerhalb dessen sich das abschattende Objekt befinden muss.

Indem mehrere, beabstandet voneinander angeordnete Lichtquellen 1 (Fig. 1) verwendet werden, ist das abschattende Objekt genauer lokalisierbar und in seiner Form genauer erkennbar, da es sich im Überschneidungsbereich 6 mehrere derartiger Sektoren befinden muss.

Der Spiegel 1.2 kann typischerweise mit einer festen Frequenz von z.B. 1kHz rotieren. Das Kalibrieren der Winkelstellung bei jedem Durchlauf kann beispielsweise durch einen Lichtschranken realisiert werden, welcher durch einen am Motor 1.3 angebrachten Gegenstand einmal pro Umdrehung unterbrochen oder durchgelassen wird, und dabei ein Signal an die auswertende Steuerung sendet, durch welches eine bestimmte Winkelstellung des Motors 1.3 und damit des Spiegels 1.2 und damit der Richtung des Strahls 2 gekennzeichnet wird.

Um Störsignale an Detektorflächen durch nichtzugehörige Lichtquellen 1 zu vermeiden und um die Lebensdauer der verwendeten Laserlichtquellen 1.1 zu erhöhen, ist es vorteilhaft, die Laserlichtquellen 1.1 während des Durchlaufs des Spiegels 1.2 durch einen Winkelbereich an dem ohnedies nicht gemessen wird (gemäß Fig. 4 zwischen den Zeitpunkten t₃ und t₀+T) auszuschalten.

Bei Anwendung von zwei Lichtquellen 1 und bei einer Rotationsfrequenz von 1 kHz sind für ein abschattendes Objekt pro Millisekunde vier Winkelwerte auszulesen und zu verarbeiten um die Position des Objektes und seine ungefähre Kontur einzugrenzen.

Bei Anwendung der erfindungsgemäßen Sensorflächen 3 kann sinnvoll mit einer Ausleserate von 20 MHz aus den Sensorflächen gearbeitet werden. Damit fallen pro Lichtquelle und Überstreichen des ihr zugeordneten Sensorflächenbereiches etwa 5000 Messergebnisse an. Abhängig von der Größe der zu überwachenden Fläche liegt damit die Ortsauflösung der Schattenerkennung im Millimeterbereich bis Submillimeterbereich. Damit ist in einem Raum üblicher Größe (z.B. 20 m2) auch eine Mehrzahl von Objekten, deren Größe im Zentimeterbereich liegen kann, problemlos individuell erkennbar und lokalisierbar.

An Abwandlungen zu dem beschrieben Ausführungsbeispiel seien noch erwähnt:
Für die Ablenkung der Richtung des Lichtstrahls braucht man nicht unbedingt eine elektromechanische Vorrichtung zu verwenden. Es können auch elektrooptische Elemente verwendet werden. Damit hervorgerufene kleine Winkeländerungen eines Lichtstrahls können über einen gekrümmten Spiegel verstärkt werden. Gegenüber der beschriebenen Verwendung eines Elektromotors können damit unter Umständen die Geräuschvermeidung verbessert und die Lebensdauer erhöht werden.

Gleiches kann man erreichen, indem man den Spiegel mittels Piezoeffekt verstellt und zusätzlich die Ablenkung des Lichtstrahls mittels eines gekrümmten Spiegels verstärkt. Man kann auch elektrooptische Elemente und Piezoverstellung eines Spiegels kombinieren und erforderlichenfalls zusätzlich auf dem Weg des Lichtstrahls einen gekrümmten Spiegel nachschalten.

Das Licht der Laserlichtquellen 1.1 kann man in einer schnellen Frequenz schnell blinken lassen und aus dem gemessenen Signal nur diese Frequenz herausfiltern. Damit kann Hintergrundlicht gut ausgefiltert werden.

Vor allem dann, wenn die Umrisse eines abschattenden Körpers genauer als in dem in Fig. 1 skizzierten Beispiel erkennbar sein sollen, ist es sinnvoll mehr als zwei Lichtquellen 1 zu verwenden, welche voneinander beabstandet bevorzugt am Rand der zu überwachenden Fläche anzuordnen sind. Es ist dann wichtig zu beachten, dass im Fall von ununterscheidbaren Lichtquellen auf eine Detektorfläche zu einem Zeitpunkt nur jeweils eine Lichtquelle leuchten darf, da ansonsten die von einer Detektorfläche kommenden Signale in ihrer Aussage bezüglich Schattengrenzen mehrdeutig sind. Durch eine übergeordnete Steuerung sollte daher eine Lichtquelle immer dann ausgeschaltet werden, wenn ihr Lichtstrahl auf eine solche Detektorfläche gerichtet wäre, auf welche zu dem Zeitpunkt schon der Lichtstrahl einer eingeschalteten Lichtquelle gerichtet ist. Man kann natürlich auch mehrere kürzere Detektorstreifen verwenden und auf jeden Streifen ohnedies nur eine einzige Lichtquelle leuchten lassen. Ebenso könnte man Lichtquellen verwenden, bei denen die Intensität des Lichtes mit einer bestimmten Kennfrequenz für die individuelle Lichtquelle schwankt. Aus den Detektionsergebnissen ist dann durch Frequenzfilterung erkennbar, welche Lichtquelle verursachend war.

Indem die durch den Lichtvorhang zu überwachende Fläche horizontal über einer Bodenfläche angeordnet wird, kann damit Bewegung von Personen oder Objekten auf der Bodenfläche gut überwacht und aufgezeichnet werden. Der erfindungsgemäße Lichtvorhang ist so robust und schnell und hat eine ausreichend hohe Auflösung, dass damit beispielsweise auch die Positionsveränderungen aller Fußballspieler auf einem Fußballfeld während eines Fußballspieles mitverfolgt werden können.

Auf Grund seiner Schnelligkeit und Genauigkeit ist der erfindungsgemäße Lichtvorhang auch sehr gut für Überwachungsaufgaben in und an Maschinen verwendbar. Ebenso kann er als Positionsdetektor in einem Regelkreis zur Steuerung der Bewegung eines Objektes die Bewegungen des zu steuernden Objektes erfassen und melden.

Nicht zuletzt kann der erfindungsgemäß Lichtvorhang auch als Eingabegerät für eine Datenverarbeitungsanlage verwendet werden, ähnlich einem Touchpad. Dazu sind Detektorflächen und Lichtquellen an einer erhöhten Randeinfassung einer Eingabefläche, welche ein Bildschirm oder eine Projektionsfläche, oder auch die Rückseite einer durchscheinenden Projektionsfläche sein kann, anzuordnen. Das Ergebnis der Positionsdetektion kann in der Datenverarbeitungsanlage wie die Cursorposition einer Eingabemaus gedeutet und verwendet werden. Es ist damit problemlos möglich, in Echtzeit die Position von mehreren als berührenden Fingern oder Zeigegeräten zu lokalisieren; die Funktion ist dabei unabhängig vom Zustand der zu berührenden Fläche.

## Patentansprüche

1. Lichtvorhang für die optische Detektion von abschattenden Objekten in einer zu überwachenden Fläche, wobei die zu überwachende Fläche von einer Lichtquelle aus durch einen kollimierten, in seiner Richtung veränderbaren Lichtstrahl wiederholt überstrichen wird, wobei die Leistung des die Fläche durchquerenden Lichtes gemessen wird, wobei durch eine auswertende Steuerung aus dem zeitlichen Verlauf der gemessenen Leistung unter Kenntnis des zeitlichen Verlaufes der Richtung des Lichtstrahls auf die Schattengrenzen und damit auf Position und Größe eines abschattenden Objektes geschlossen wird,
**dadurch gekennzeichnet, dass**
für die Messung der Leistung des die Fläche durchquerenden Lichtes am Rand der zu überwachenden Fläche eine optische Detektorfläche (3) angeordnet ist, durch welche die Leistung des von einer Lichtquelle (1) ausgesandten Lichtstrahls (2) messbar ist, wobei die optische Detektorfläche (3) ein flächiger Lichtwellenleiter ist, in welchem photolumineszente Partikel integriert sind und an welchem ein oder mehrere photoelektrische Sensoren (3.4) an Positionen entlang der Längserstreckung des flächigen Lichtwellenleiters angebracht sind, welche im Stande sind, Licht aus der Wellenleitermode auszukoppeln und dadurch ein elektrisches Signal zu generieren, dessen Stärke von der Leistung des ausgekoppelten Lichtes abhängig ist.

2. Lichtvorhang nach Anspruch 1, **dadurch gekennzeichnet, dass** mehrere photoelektrische Sensoren (3.4) in einem regelmäßigem Abstand zueinander entlang der Längserstreckung des flächigen Lichtwellenleiters angeordnet sind.

3. Lichtvorhang nach Anspruch 1 oder 2, **dadurch gekennzeichnet, dass** von mehreren photoelektrische Sensoren (3.4) der optischen Detektorfläche (3) das elektrische Summensignal auslesbar und an die auswertende Steuerung zuführbar ist.

4. Lichtvorhang nach Anspruch 3, **dadurch gekennzeichnet, dass** mehrere photoelektrische Sensoren (3.4) der optischen Detektorfläche (3) an gemeinsamen Anschlussleitungen (3.5) zueinander parallel geschaltet sind.

5. Lichtvorhang nach einem der Ansprüche 1 bis 4, **dadurch gekennzeichnet, dass** für die Richtungsänderung des Lichtstrahls 2 elektrooptische Elemente und/oder ein durch Piezoeffekt in seiner Lage veränderbarer Spiegel vorgesehen ist und dass diesen Elemente und/oder diesem Spiegel auf dem Weg des Lichtstrahls ein Spiegel mit gekrümmter Oberfläche nachgereiht ist, durch den eine Winkeländerung des auftreffenden Lichtstrahls vergrößerbar ist.

6. Lichtvorhang nach einem der Ansprüche 1 bis 4, **dadurch gekennzeichnet, dass** für die Richtungsränderung des von einer Laserlichtquelle (1.1) ausgehenden Lichtstrahls (2) ein Spiegel (1.2) vorgesehen ist, auf welchen der Lichtstrahl der Laserlichtquelle (1.1) ausgerichtet ist und welcher durch einen Antrieb (1.3) zu gleichförmiger Rotation antreibbar ist.

7. Lichtvorhang nach Anspruch 6, **dadurch gekennzeichnet, dass** die Winkelstellung des Antriebes (1.3) und/oder des Spiegels (1.2) zumindest einmal pro Umdrehung messbar ist.

8. Lichtvorhang nach Anspruch 6 oder Anspruch 7, **dadurch gekennzeichnet, dass** der rotierende Spiegel (1.2) an einem Rand einer zu überwachenden Fläche angeordnet ist und dass die Laserlichtquelle (1.1) während jeder Rotation des Spiegels (1.2) in einem definierbaren Winkelsegment der Stellung des Spiegels (1.2) ausschaltbar ist und nach durchlaufen dieses Segments wieder einschaltbar ist.

9. Lichtvorhang nach einem der Ansprüche 1 bis 8, **dadurch gekennzeichnet, dass** eine Mehrzahl von zueinander beabstandet angeordneten Laserlichtquellen (1.1) an der zu überwachenden Fläche angeordnet sind und dass die Laserlichtquellen (1.1) individuell durch eine Steuerung immer dann ausschaltbar sind, wenn sie in eingeschaltetem Zustand auf eine Detektorfläche leuchten würden, auf welche zu diesem Zeitpunkt schon eine andere Laserlichtquelle tatsächlich leuchtet.

10. Lichtvorhang nach einem der Ansprüche 1 bis 9, **dadurch gekennzeichnet, dass** die zu überwachende Fläche horizontal über einer Bodenfläche angeordnet ist und dass durch den Lichtvorhang Bewegungen von Personen oder Objekten auf der Bodenfläche überwacht werden.

11. Lichtvorhang nach Anspruch 10, **dadurch gekennzeichnet, dass** damit Positionsveränderungen von Sportlern auf einem Spielfeld mitverfolgt werden.

12. Lichtvorhang nach einem der Ansprüche 1 bis 9, **dadurch gekennzeichnet, dass** damit Überwachungsaufgaben in und/oder an Maschinen durchgeführt werden.

13. Lichtvorhang nach einem der Ansprüche 1 bis 9, **dadurch gekennzeichnet, dass** er als Meldeglied in einer Regelstrecke für die Bewegung eines Objektes eingesetzt ist.

14. Lichtvorhang nach einem der Ansprüche 1 bis 9, **dadurch gekennzeichnet, dass** er als Eingabegerät an eine Datenverarbeitungsanlage verwendet wird, wozu die durch ihn zu überwachende Fläche über einer Eingabefläche angeordnet ist, an welche durch einen Finger oder einen Griffel oder einen vergleichbaren Gegenstand durch die zu überwachende Fläche hindurch zwecks Eingabe an die Datenverarbeitungsanlage getippt werden muss.

## Claims

1. A light curtain for the optical detection of shading objects in the monitored area, whereby the area to be monitored is repeatedly swept from a light source by a collimated light beam, which is variable in its direction, whereby the power of the light traversing the area is measured, whereby a determination is made by means of an evaluating control from the time profile of the measured power with knowledge of the time profile of the direction of the light beam on the shadow borders and, thereby, regarding the position and size of a shading object,
**characterised in that**,
for the measurement of the power of the light passing through the area at the edge of the monitored area, an optical detector area (3) is arranged, through which the power of the light beam (2) emitted from a light source (1) is able to be measured, wherein the optical detector surface (3) is a planar optical waveguide, in which photoluminescent particles are integrated and to which one or more photoelectric sensors (3.4) are mounted at positions along the longitudinal extension of the planar optical waveguide, which are capable of coupling light from the waveguide mode and, thereby, generating an electrical signal, the strength of which depends on the power of the uncoupled light.

2. A light curtain according to Claim 1, **characterised in that** a plurality of photoelectric sensors (3.4) are arranged at a regular distance to each other along the longitudinal extension of the planar optical waveguide.

3. A light curtain according to Claim 1 or 2, **characterised in that** the electric sum signal can be read out and supplied to the evaluating control from a plurality of photoelectric sensors(3.4) of the optical detection surface(3).

4. A light curtain according to Claim 3, **characterised in that** a plurality of photoelectric sensors (3.4) of the optical detector surface (3) are connected parallel to each other to common connection lines (3.5).

5. A light curtain according to one of Claims 1 to 4, **characterised in that**, for the change in direction of the light beam 2, electro-optical elements and/or a mirror, which is variable in terms of its position by means of the piezoelectric effect, is provided and that a mirror with a curved surface is/are downstream from these elements and/or this mirror on the path of the light beam, by which mirror a change of angle of the incident light beam can be increased.

6. A light curtain according to one of Claims 1 to 4, **characterised in that**, for the change in direction of the light beam (2) emitted from a laser light source (1.1), a mirror (1.2) is provided, to which the light beam of the laser light source (1.1) is aligned and which can be driven by a drive (1.3) to a uniform rotation.

7. A light curtain according to Claim 6, **characterised in that** the angular position of the drive (1.3) and/or the mirror (1.2) is measurable at least once per revolution.

8. A light curtain according to Claim 6 or Claim 7, **characterised in that** the rotating mirror (1.2) is arranged on an edge of a surface, which is to be monitored, and that the laser light source (1.1) is able to be switched off during each rotation of the mirror (1.2) in a definable angular segment of the position of the mirror (1.2) and which can be switched back on again after this segment has been traversed.

9. A light curtain according to one of Claims 1 to 8, **characterised in that** a plurality of mutually spaced-apart laser light sources (1.1) are arranged on the surface to be monitored and that the laser light sources (1.1) are always able to be switched off individually by a controller, when, in a switched-on state, they would light up a detector surface, to which a different laser light source is actually already lit at said time.

10. A light curtain according to one of Claims 1 to 9, **characterised in that** the surface to be monitored is horizontally arranged over a bottom surface and that movements of persons or objects on the ground surface are monitored by the light curtain.

11. A light curtain according to Claim 10, **characterised in that** position changes of athletes on a playing field can thereby be followed.

12. A light curtain according to one of Claims 1 to 9, **characterised in that** monitoring functions are thereby performed in and/or on machines.

13. A light curtain according to one of Claims 1 to 9, **characterised in that** it is used as a message link in a control system for the movement of an object.

14. A light curtain according to one of Claims 1 to 9, **characterised in that** it is used as an input device to a data processing system, to which the area to be monitored by it is arranged on an input surface, on which typing has to occur on the data processing system by means of a finger or an electronic pen or another similar object across the surface to be monitored for the purpose of inputting.

## Revendications

1. Rideau lumineux pour la détection optique d'objets masqués dans une surface à surveiller, celle-ci étant balayée de façon réitérée par un faisceau lumineux collimaté, modifiable dans la direction, à partir d'une source lumineuse, la puissance de la lumière qui traverse la surface étant mesurée, une commande d'évaluation permettant de déduire les limites des ombres et, de ce fait, la position et la taille d'un objet masqué à partir du déroulement temporel de la puissance mesurée en connaissant le déroulement temporel de la direction du faisceau lumineux,
**caractérisé en ce que**
pour mesurer la puissance de la lumière qui doit traverser la surface, une surface de détecteur optique (3) est disposée au bord de la surface à surveiller, permettant de mesurer la puissance du faisceau lumineux (2) émise par la source lumineuse (1), la surface de détecteur optique (3) étant un conducteur à fibres optiques en nappe, dans lequel sont intégrées des particules photoluminescentes et sur lequel sont montés un ou plusieurs capteurs photoélectriques (3.4) dans des positions qui longent le côté longitudinal du conducteur à fibres optiques en nappe, ces capteurs étant en mesure d'extraire la lumière hors du mode du guide d'onde optique et de générer par là un signal électrique dont la puissance dépend de la puissance de la lumière extraite.

2. Rideau lumineux selon la revendication 1, **caractérisé en ce que** plusieurs capteurs photoélectriques (3.4) sont disposés à espaces réguliers les uns par rapport aux autres le long du côté longitudinal du conducteur à fibres optiques en nappe.

3. Rideau lumineux selon la revendication 1 ou 2, **caractérisé en ce que** le signal électrique de somme de plusieurs capteurs photoélectriques (3.4) du conducteur à fibres optiques en nappe (3) peut être lu et transmis à la commande qui évalue les signaux.

4. Rideau lumineux selon la revendication 3, **caractérisé en ce que** plusieurs capteurs photoélectriques (3.4) du conducteur à fibres optiques en nappe (3) sont branchés parallèlement les uns par rapport aux autres à des lignes de raccordement communes (3.5).

5. Rideau lumineux selon l'une des revendications 1 à 4, **caractérisé en ce que**, pour le changement de direction du faisceau lumineux, 2 éléments électro-optiques et/ou un miroir, dont la position est modifiable par effet pièze est prévu et que sur la trajectoire du faisceau lumineux, un miroir à surface incurvée est placé en aval de ces éléments et/ou du premier miroir, le second miroir permettant d'agrandir un changement d'angle du faisceau lumineux qui s'y reflète.

6. Rideau lumineux selon l'une des revendications 1 à 4, **caractérisé en ce que**, pour le changement de direction du faisceau lumineux (2) provenant d'une source de lumière laser (1.1), un miroir (1.2) est prévu, sur lequel est orienté le faisceau lumineux de la source de lumière au laser (1.1) et pouvant être entraîné en une rotation uniforme par un entraînement (1.3).

7. Rideau lumineux selon la revendication 6, **caractérisé en ce que** la position angulaire de l'entraînement (1.3) et/ou du miroir (1.2) peut être mesurée au moins une fois par rotation.

8. Rideau lumineux selon la revendication 6 ou la revendication 7, **caractérisé en ce que** le miroir rotatif (1.2) est installé sur un bord d'une surface à surveiller et que la source de lumière laser (1.1) peut être déconnectée au cours de chaque rotation du miroir (1.2) dans un segment angulaire de la position du miroir (1.2) définissable, et de nouveau rallumée, dès qu'elle a passé ce segment.

9. Rideau lumineux selon l'une des revendications 1 à 8, **caractérisé en ce que** plusieurs sources de lumière au laser (1.1) espacées les unes par rapport aux autres sont disposées le long de la surface à surveiller et que les sources de lumière laser (1.1) peuvent toujours être déconnectées individuellement par une commande, dès qu'elles se dirigeraient à l'état allumé sur une surface de détecteur sur laquelle une autre source de lumière laser est déjà dirigée à cet instant précis.

10. Rideau lumineux selon l'une des revendications 1 à 9, **caractérisé en ce que** la surface à surveiller est disposée horizontalement au-dessus d'un sol et que le rideau lumineux surveille les mouvements de personnes ou d'objets au sol.

11. Rideau lumineux selon la revendication 10, **caractérisé en ce que** les changements de positions des sportifs peuvent être suivis sur un terrain de jeu.

12. Rideau lumineux selon l'une des revendications 1 à 9, **caractérisé en ce que** ce système peut accomplir des missions de surveillance dans et/ou sur des machines.

13. Rideau lumineux selon l'une des revendications 1 à 9, **caractérisé en ce qu'**il est utilisé comme élément témoin dans un système asservi pour le mouvement d'un objet.

14. Rideau lumineux selon l'une des revendications 1 à 9, **caractérisé en ce qu'**il est utilisé comme module de saisie sur une installation de traitement des données, la surface à surveiller par celui-ci étant placée sur une surface de saisie sur laquelle il faut taper par un doigt ou un crayon ou un objet comparable à travers la surface à surveiller pour la saisie sur l'installation de traitement des données.
